# EUROPÄISCHE PATENTANMELDUNG

(11) **EP 4 282 832 A1**
(43) Veröffentlichungstag der Anmeldung: **29.11.2023**
(21) Anmeldenummer: 22175539.0
(22) Anmeldetag: 25.05.2022
(51) Int. Cl.: C02F 3/00, C02F 3/08, C02F 3/10, C02F 3/12, C02F 3/20

(54) **VERFAHREN UND SYSTEM ZUM ERZEUGEN VON GRANULAREM SCHLAMM**

(71) Anmelder: Arnold Jäger Holding GmbH, 30559 Hannover (DE)
(72) Erfinder: PAJOOH, Eshan Mohammad, Hannover (DE); KAHLE, Janna, Hannover (DE); VON CONSBRUCH, Hans-Christian, Hannover (DE)
(74) Vertreter: Bremer, Ulrich

(57) **Zusammenfassung**

Die Erfindung betrifft ein Verfahren zum Erzeugen von granularem Schlamm in einem mit Abwasser befüllten Klärbecken (1) mit mindestens einem Trägerkörper (2a), an dem sessile Biomasse anwachsen kann, und wobei sich in dem Abwasser suspendierte Biomasse befindet, wobei die sessile Biomasse regelmäßig von dem mindestens einen Trägerkörper (2a) derart abgeschert wird, dass sich ein abgescherter Biofilm bildet, der als suspendierte Biomasse in das Abwasser (A) im Klärbecken (1) übergeht, wobei in mehreren Zyklen jeweils mindestens die folgenden Schritte durchgeführt werden:
- Befüllen des Klärbeckens (1),
- Durchmischen und/oder Aufwirbeln von abgesetzter suspendierter Biomasse, um das eingefüllte Abwasser (A) mit der abgesetzten suspendierten Biomasse derartig in Kontakt zu bringen, dass sich ein abgescherte Biofilm nachfolgend in granularen Schlamm umwandelt;
- Belüften der sessilen und suspendierten Biomasse,
- Abscheren der sessilen Biomasse;
- Warten, bis sich der abgescherte Biofilm absetzt und bis sich Klarwasser im oberen Bereich des Klärbeckens abtrennt; und
- Entnehmen des biologisch gereinigten Klarwassers (K).

## Beschreibung

Die Erfindung betrifft ein Verfahren zum Erzeugen von granularem Schlamm, insbesondere im Rahmen eines SBR-Verfahrens, sowie ein System zum Erzeugen granularen Schlamms.

In biologisch reinigenden Kläranlagen bzw. Systemen, die nach dem diskontinuierlichen, zeitorientierten SBR-Verfahren (SBR; Sequencing-Batch-Reactor) arbeiten, finden innerhalb eines Reaktors bzw. Klärbeckens und innerhalb eines Reinigungszyklus unterschiedliche Phasen statt, insbesondere eine Chargenbeschickung, eine Reaktionsphase, eine Absetzphase, eine Abzugsphase und ggf. einer Phase des Stillstandes. Die Chargenbeschickung umfasst die Befüllung des Klärbeckens. Anschließend findet in der Reaktionsphase die Umwandlung der Abwasserinhaltsstoffe statt, insbesondere über ein Belüftungssystem. Während der Absetzphase wird suspendierte Biomasse, d.h. Schlammflocken in der Suspension, vom gereinigten Abwasser bzw. Klarwasser getrennt. Das gereinigte Klarwasser wird der Kläranlage bzw. dem Klärbecken in der darauffolgenden Abzugsphase entnommen, während ein Teil der abgesetzten Biomasse in der Regel (pro Zyklus/pro Tag) als Überschussschlamm aus dem System abgezogen wird und daher nicht im Behandlungsprozess weiterverwendet wird. Anschließend beginnt der Reinigungszyklus von Neuem.

Für die Effizienz dieses SBR-Verfahrens sind neben der Konstruktion und der Betriebsweise der Kläranlage die Mikroorganismen ausschlaggebend, die im System angereichert werden, und die Absetzfähigkeit der Schlammflocken in der Suspension bzw. der suspendierten Biomasse. Die Schlammflocken in der Suspension können durch eine Fest-Flüssig-Trennung in Form von Sedimentation von der Wasserphase separiert werden. Der Sedimentationsprozess ist der entscheidende Faktor für die Behandlung. Er limitiert nämlich die Menge an Biomasse im System, das mögliche Austauschverhältnis und die erforderliche Abwicklungszeit. Je deutlicher sich die Schlammflocken in der Suspension absetzen, desto leichter ist die Trennung zwischen der festen Phase in Form von Belebtschlammflocken in der Suspension und der flüssigen Phase, dem behandelten Abwasser bzw. dem Klarwasser.

Ist die Trennung zwischen fester und flüssiger Phase klarer und in Fällen, in denen das Abwasser hohe Konzentrationen an biologisch abbaubaren organischen Stoffen enthält, kann mehr Biomasse durch Absetzung im SBR-Verfahren am Behandlungsprozess mitwirken, da in der Abzugsphase weniger Biomasse (ungewollterweise) mit abgezogen wird. Gleichzeitig ermöglicht eine hohe Konzentration an verbleibender (suspendierter) Biomasse im Klärbecken die Behandlung höherer Lasten sowie einen stabilen Betrieb während Spitzenlasten.

Nachteilig hierbei ist, dass die Absetzgeschwindigkeit der suspendierten Biomasse aufgrund der Struktur und daraus resultierend der Dichte der Schlammflocken, die nur geringfügig höher ist als die von Wasser (Flocken: 1,038 g/ml Flocken; Wasser: 0,997 g/ml), gering ist. Daher werden im SBR-Verfahren lange Absetzphasen für den Prozess benötigt, um eine klare Trennung zwischen fester und flüssiger Phase zu erreichen. Dies verlängert den Behandlungsprozess maßgeblich und für eine Erhöhung der Behandlungskapazität sind entsprechend größere Kläranlagen zum Behandeln des Abwassers bereitzustellen.

Weiterhin ist es bekannt, granularen Schlamm für die Abwasserbehandlung zu verwenden, wobei dieser aus der suspendierten Biomasse im Klärbecken entsteht, die sich aus einem Gemisch von verschiedenen Schlammmorphologien zusammensetzt, wobei der Anteil des Schlammes mit guter Absetzeigenschaft deutlich geringer ist als der Anteil der flockenförmigen Schlammfraktion, weshalb sich die suspendierte Biomasse insgesamt langsam absetzt und daher schlechte Absetzeigenschaften aufweist. Für den Granulierungsprozess werden entsprechende Prozessbedingungen im Klärbecken eingestellt, unter denen sich aus der suspendierten Biomasse granularer Schlamm bildet. Nachteilig hierbei ist, dass die Bildung des granularen Schlamms aufgrund des geringen Anteils der suspendierten Biomasse mit guten Absetzeigenschaften in einem konventionellen SBR-Prozess sehr lange dauert.

In Kläranlagen, die mit einem Festbett, d.h. FBBR (Fixed bed biofilm reactor), arbeiten, können sich im Klärbecken ergänzend feste Trägerkörper, beispielsweise textile Festbetten, befinden, an denen das zu reinigende Abwasser vorbeigeführt wird. Die Trägerkörper weisen eine große Oberfläche auf, an der sich Mikroorganismen aus dem zugeführten Abwasser bzw. Belebtschlamm absetzen, so dass sich sessile Biomasse bildet. Die suspendierte Biomasse und die sessile Biomasse im Klärbecken ernähren sich von Schad- bzw. Nährstoffen im Abwasser und wandeln diese um, z.B. beim Abbau von Ammonium durch Nitrifikation. Die Umwandlungsprozesse des Kohlenstoffabbaus und der Nitrifikation benötigen Sauerstoff, der über Belüftungssysteme innerhalb des Klärbeckens in Form von Luftblasen in das zu reinigende Abwasser eingetragen wird. Alternativ kann auch eine Kläranlage mit einem Wirbelbett vorgesehen sein, bei dem bewegliche Trägerkörper in den Prozess eingefügt werden, an denen sich sessile Biomasse ansiedeln kann.

Durch das Anhaften und Aufwachsen von Biomasse auf den festen oder beweglichen Trägerkörpern kann die sessile Biomasse länger im System verbleiben, als die suspendierte Biomasse. Hierdurch erhalten langsam wachsende Mikroorganismen bessere Wachstumsbedingungen als in der Suspension. Nitrifizierende Spezies wachsen meist langsamer als Mikroorganismen, die Kohlenstoffabbau betreiben. Daher wird das Wachstum nitrifizierender Spezies in der sessilen Biomasse begünstigt. Hierdurch kann eine sessile Nitrifikationsrate, d.h. das Abbauen der Schadstoffe durch die sessilen Mikroorganismen, bis zu einer gewissen Schichtdicke der sessilen Biomasse erhöht werden.

Zum Optimieren der sessilen Nitrifikationsrate ist bekannt, die sessile Biomasse in gewissen Zeiträumen abzuscheren, beispielsweise aus EP 0 201 924 A2, WO 03/076350 A1, EP 1 088 793 A1 und DE 22 35 470 A1. Eine gezielte Weiterverwendung der abgescherten sessilen Biomasse im Behandlungsprozess ist darin allerdings nicht offenbart. In DE 10 2019 109 328 A1 ist ferner beschrieben, dass die von einem festen Trägerkörper abgescherten Schlammflocken in die Suspension übertragen werden können, wo sie die suspendierte Nitrifikationsrate mit beeinflussen können.

Aufgabe der vorliegenden Erfindung ist, ein Verfahren und ein System bereitzustellen, die in einfacher Weise eine optimierte und deutlich schnellere Behandlung von Abwasser im Rahmen eines SBR-Verfahrens ermöglichen.

Diese Aufgabe wird erfindungsgemäß mit einem Verfahren und einem System gemäß den unabhängigen Ansprüchen gelöst. Die Unteransprüche beschreiben bevorzugte Weiterbildungen.

Erfindungsgemäß ist demnach ein Verfahren zum Erzeugen von granularem Schlamm in einem System mit mindestens einem Klärbecken vorgesehen,
wobei sich in dem mindestens einen Klärbecken mindestens ein Trägerkörper, vorzugsweise als Bestandteil eines Festbettmoduls oder eines Wirbelbetts befindet, der aus einem Material besteht, an dem ein Biofilm anhaften oder sich ansammeln kann, vorzugsweise aus Kunststoff oder einem textilen Stoff, so dass an dem mindestens einen Trägerkörper jeweils sessile Biomasse anwächst oder anwachsen kann,
und wobei sich in dem Abwasser ferner suspendierte Biomasse befindet, wobei das Abwasser mit der sessilen und der suspendierten Biomasse jeweils biologisch behandelt werden kann,
wobei die sessile Biomasse in dem Verfahren (regelmäßig) von dem mindestens einen Trägerkörper so abgeschert wird, dass sich ein abgescherter Biofilm bildet, der als suspendierte Biomasse in das Abwasser im Klärbecken übergeht,
wobei in mehreren sich wiederholenden Zyklen beispielsweise im Rahmen eines SBR-Verfahrens jeweils mindestens die folgenden Schritte durchgeführt werden:
   - Befüllen des Klärbeckens mit verunreinigtem Abwasser über mindestens eine Zulaufleitung, und
   - Durchmischen und/oder Aufwirbeln von suspendierter Biomasse bzw. einer schweren Schlammfraktion, die sich an einem Boden des Klärbeckens absetzt oder abgesetzt hat, um das eingefüllte verunreinigte Abwasser mit der abgesetzten suspendierten Biomasse derart in Kontakt zu bringen, dass sich der bereits von dem mindestens einen Trägerkörper abgescherte Biofilm, der Bestandteil der abgesetzten suspendierten Biomasse bzw. der schweren Schlammfraktion ist, nachfolgend in granularen Schlamm umwandeln kann, insbesondere weil der abgescherte Biofilm und/oder der daraus erzeugte granulare Schlamm gezielt über einen längeren Zeitraum im Klärbecken gehalten wird/werden;
   - Belüften der sessilen Biomasse und der suspendierten Biomasse mit einem in einem unteren Bereich des Klärbeckens angeordneten Belüftungssystem und Abscheren der sessilen Biomasse von dem mindestens einen Trägerkörper, so dass ein abgescherter Biofilm als suspendierte Biomasse in das Abwasser im Klärbecken übergeht und damit zur suspendierten Nitrifikationsrate beitragen kann;
   - Warten in einer Absetzphase, bis sich der abgescherte Biofilm und ggf. bereits umgewandelter granularer Schlamm aus der suspendierten Biomasse in dem unteren Bereich oder an dem Boden des Klärbeckens absetzt und bis sich in einem oberen Bereich des Klärbeckens Klarwasser abgetrennt von der suspendierten Biomasse befindet,
wobei dazu in einem Separierungs-Schritt innerhalb eines Reinigungszyklus suspendierte Schlammflocken und/oder eine leichte Schlammfraktion aus der suspendierten Biomasse, die in dem oberen Bereich des Klärbeckens schweben, abgezogen werden; und - Entnehmen des biologisch gereinigten Klarwassers aus dem oberen Bereich des Klärbeckens.

Die Erfindung betrifft weiterhin ein System zum Erzeugen von granularem Schlamm, insbesondere zur Durchführung des erfindungsgemäßen Verfahrens. Der granulare Schlamm kann dabei im Rahmen der Erfindung Biomasse in Form eines Granulats oder in granulatähnlicher Form aufweisen, wobei die Form dieser Biomasse aufgrund der Gegebenheiten während des Granulierungsprozesses von der idealen Kugelform abweichen kann. Demnach wird im erfindungsgemäßen Verfahren granularer bzw. granulatähnlicher Schlamm erzeugt.

Vorteilhafterweise wurde dabei erkannt, dass der von den Trägerkörpern abgescherte Biofilm eine sehr schnelle Absetzzeit aufweist, wobei diese Absetzzeit der eines Granulates ähnelt. Dadurch ist eine deutlich schnellere und klare Trennung der flüssigen und der festen Phase im SBR-Verfahren gegeben. Aber auch die Abbaueigenschaften im biologischen Behandlungsprozess werden dabei verbessert, vergleichbar zu granularem Schlamm, insbesondere aerobem granularem Schlamm (AGS), was wiederum eine Leistungssteigerung des Verfahrens mit sich bringt.

Erfindungsgemäß wird dabei ein herkömmliches SBR-Verfahren durch
- die Integration mindestens eines Trägerkörpers, beispielsweise als Bestandteil eines Festbettmoduls oder eines Wirbelbetts, in das Klärbecken,
- das Abscheren der sessilen Biomasse von diesem sowie
- das gezielte in Kontaktbringen des Abwassers mit der abgesetzten schweren Schlammfraktion, insbesondere dem abgescherten Biofilm, angepasst, um Granulat und/oder granulatähnliche Biomasse zu erzeugen. Dadurch kann im biologischen Behandlungsverfahren eine deutliche Verkürzung des gesamten Schlammumwandlungsprozesses und eine klare Steigerung der Absetzgeschwindigkeit erzielt werden. Dies führt zu einer deutlichen Verkürzung der Zeiten für einen Reinigungszyklus und damit den Behandlungsprozess im Rahmen des SRB-Verfahrens insgesamt.

Dazu wird der granulare Schlamm nicht wie in herkömmlichen Granulierungsprozessen aus der suspendierten Biomasse erzeugt, die sich sehr langsam absetzt bzw. schlechte Absetzeigenschaften aufweist, sondern explizit aus der sich schnell absetzenden schweren Schlammfraktion, in der sich der vom mindestens einen Trägerkörper abgescherte Biofilm (sessile Biomasse) befindet. Diese Granulaterzeugung bzw. dieser Granulierungsprozess aus dem abgescherten Biofilm erfolgt vorzugsweise dadurch, dass das Abwasser derartig in Kontakt mit dem im Klärbecken gehaltenen abgescherten Biofilm gebracht wird, dass die Biomasse einer hohen Konzentration ausgesetzt ist, was zu einer besseren Diffusion des Substrats in die verschiedenen Zonen des abgescherten Biofilms beiträgt, die unter anoxischen Bedingungen umgewandelt werden kann, wodurch sich der abgescherte Biofilm unter Beteiligung weiterer Prozesse in granularen Schlamm umwandelt. Vorteilhafterweise wird also die Eigenschaft von sessiler Biomasse bzw. dem abgescherten Biofilm gezielt ausgenutzt, dass langsam-wachsende Mikroorganismen auf der Oberfläche des abgescherten Biofilms das Substrat im Abwasser nur langsam aufnehmen können und damit ein Eindringen in den abgescherten Biofilm begünstigen und dadurch das schnelle Umwandeln in granularen Schlamm gerade ermöglichen.

Vorzugsweise ist dabei weiterhin vorgesehen, dass das Abscheren der sessilen Biomasse gleichzeitig mit dem Belüften der sessilen und der suspendierten Biomasse dadurch erfolgt, dass die von einem Belüftungssystem mit einer Intensität in das Abwasser eingelassenen Luftblasen die sessile Biomasse vom jeweiligen Trägerkörper, insbesondere dem Trägerkörper des Festbettmoduls, abscheren, insbesondere durch Einstellen einer sich ändernden Intensität der Luftblasen. Demnach können die Luftblasen parallel zur Belüftung der Biomasse auch für ein Abscheren der sessilen Biomasse verwendet werden, so dass grundsätzlich keine zusätzliche Vorrichtung dazu nötig ist, was den Prozess insgesamt vereinfacht und einfacher kontrollierbar macht. Insbesondere eine intermittierende Belüftung kann dabei zu einem sehr effizienten Abscheren führen. Bei Verwendung eines Wirbelbetts kann das Abscheren der sessilen Biomasse stattdessen oder ergänzend dadurch erfolgen, dass die sich bewegenden Trägerkörper im Abwasser kollidieren bzw. sich berühren, ggf. unterstützt durch eine von den Luftblasen in die Trägerkörper induzierte Bewegung, und die sessile Biomasse dadurch auch mechanisch abgeschert wird.

Vorzugsweise ist weiterhin vorgesehen, dass die suspendierten Schlammflocken und/oder die leichte Schlammfraktion aus der suspendierten Biomasse, die in dem oberen Bereich des Klärbeckens schweben,
- während des Befüllens des Klärbeckens mit verunreinigtem Abwasser, und/oder
- während des Wartens in der Absetzphase, bis sich der abgescherte Biofilm aus der suspendierten Biomasse in dem unteren Bereich oder an dem Boden des Klärbeckens absetzen,
abgezogen werden, so dass sich nachfolgend in dem oberen Bereich des Klärbeckens Klarwasser abgetrennt von der suspendierten Biomasse befindet. Das Abziehen der suspendierten Biomasse mit schlechten Absetzeigenschaften kann also in verschiedenen Phasen des Behandlungsprozesses erfolgen, in denen sich die unterschiedlichen Absetzeigenschaften der verschiedenen Schlammfraktionen zeigen. Dadurch kann der Separierungsprozess weiter optimiert werden.

Vorzugsweise ist weiterhin vorgesehen, dass das Durchmischen und/oder Aufwirbeln von suspendierter Biomasse, die sich an einem Boden des Klärbeckens absetzt, dadurch erfolgt, dass das Abwasser unterseitig, d.h. im Bereich des Bodens des Klärbeckens, über die mindestens eine Zulaufleitungen in das Klärbecken eingefüllt wird. Demnach ist keine zusätzliche Vorrichtung für das Durchmischen bzw. Aufwirbeln nötig. Grundsätzlich könnte jedoch auch ein oberseitiges Einfüllen des Abwassers in das Klärbecken vorgesehen sein und ein Durchmischen bzw. Aufwirbeln der abgesetzten suspendierten Biomasse durch ein Rührwerk erfolgen. In beiden Varianten kann verunreinigtes Abwasser mit der vorher abgesetzten suspendierten Biomasse, insbesondere dem abgescherten Biofilm in der schweren Schlammfraktion, in Kontakt gebracht werden um dann nachfolgend die Umwandlung des abgescherten Biofilms in granularen Schlamm zu ermöglichen.

Vorzugsweise ist weiterhin vorgesehen, dass das Befüllen des Klärbeckens mit verunreinigtem Abwasser über mindestens eine, vorzugsweise zwei Zulaufleitungen derartig erfolgt, dass ein spiralförmiger Fluss erzeugt wird, um die suspendierte Biomasse, die sich in einem unteren Bereich und/oder am Boden des Klärbeckens absetzt, zu durchmischen und/oder aufzuwirbeln. Demnach kann das Abwasser in effizienter Weise mit dem abgescherten Biofilm bzw. der schweren Schlammfraktion wechselwirken, indem dieses durch das spiralförmig eingelassene Abwasser selbst effizient aufgewirbelt bzw. aufgelockert wird. Bei nur einer Zulaufleitung kann das spiralförmige Aufwirbeln im Zusammenspiel mit dem Behälter bzw. den Behälterwänden erfolgen.

Das Abwasser kann resultierend aus der durch die spiralförmige Durchmischung erzeugte größere Grenzfläche zwischen der suspendierten Biomasse und dem Abwasser den abgescherten Biofilm besser versorgen, wodurch dann eine schnellere Umwandlung in granularen Schlamm erfolgt, und nachfolgend dann einen effektiveren biologischen Behandlungsprozess bzw. Reinigungsprozess durch den abgescherten Biofilm bzw. den daraus entstandenen granularen Schlamm durchlaufen, was den Behandlungsprozess sehr effizient und schnell macht.

Das erfindungsgemäße System zum Erzeugen von granularem Schlamm, insbesondere im Rahmen eines SBR-Verfahrens, mit mindestens einem Klärbecken weist dabei mindestens auf:
- eine Zulaufleitung, durch die Abwasser in das Klärbecken eingefüllt werden kann,
- Mittel zum Durchmischen und/oder Aufwirbeln der suspendierten Biomasse bzw. der schweren Schlammfraktion, die sich an einem Boden des Klärbeckens absetzt, um das eingefüllte verunreinigte Abwasser mit der abgesetzten suspendierten Biomasse bzw. der schweren Schlammfraktion derartig in Kontakt zu bringen, dass sich ein von dem mindestens einen Trägerkörper abgescherter Biofilm, der Bestandteil der abgesetzten suspendierten Biomasse ist, durch nachfolgende Behandlungsschritte in granularen Schlamm umwandeln kann,
- mindestens einen Trägerkörper, vorzugsweise als Bestandteil eines Festbettmoduls oder eines Wirbelbetts, an dem jeweils sessile Biomasse anwachsen kann,
- ein Belüftungssystem mit Belüftungselementen mit Löchern zum Einlassen von Luftblasen in das Abwasser in dem Klärbecken, wobei das Belüftungssystem unterhalb des mindestens einen Trägerkörpers angeordnet ist,
- eine Vorrichtung zum Abscheren der sessilen Biomasse von dem mindestens einen Trägerkörper derartig, dass ein abgescherter Biofilm als suspendierte Biomasse in das Abwasser im Klärbecken übergehen kann;
- ein Separierungssystem mit perforierten Rohrleitungen, wobei das Separierungssystem in einem oberen Bereich des Klärbeckens, vorzugsweise oberhalb des Festbettmoduls (insofern vorgesehen), angeordnet ist und ausgebildet ist, suspendierte Schlammflocken und/oder eine leichte Schlammfraktion aus der suspendierten Biomasse, die in dem oberen Bereich des Klärbeckens schweben, abzuziehen, und
- Mittel zum Entnehmen des biologisch gereinigten Klarwassers aus dem oberen Bereich des Klärbeckens, beispielsweise einen Dekanter.

Vorzugsweise ist dabei vorgesehen, dass die Vorrichtung zum Abscheren der sessilen Biomasse von dem mindestens einen Trägerkörper durch das Belüftungssystem gebildet ist, das Luftblasen mit einer derartigen Intensität erzeugen und in das Abwasser einlassen kann, dass sich die sessile Biomasse von dem mindestens einen Trägerkörper ablösen und die dadurch abgescherte Biomasse (abgescherter Biofilm) als suspendierte Biomasse in das Abwasser übergehen kann. Dadurch kann die Anlage vereinfacht werden, da Komponenten für verschiedene Funktionen benutzt werden können. Es kann aber auch eine beliebige mechanisch wirkende Vorrichtung zum Abscheren der sessilen Biomasse vorgesehen sein.

Vorzugsweise ist weiterhin vorgesehen, dass das Separierungssystem aus einer Rohrkonstruktion gebildet ist, die aus mehreren ausgedehnten perforierten Rohrleitungen zusammengesetzt ist, wobei die Rohrleitungen und/oder die Rohrkonstruktion im oberen Bereich des Klärbeckens, vorzugsweise oberhalb auf einem Rahmen des Festbettmoduls, befestigt ist. Vorteilhafterweise überdeckt bzw. umgibt die Rohrkonstruktion bzw. die perforierten Rohrleitungen also eine größere Fläche, so dass die suspendierten Schlammflocken mit schlechten Absetzeigenschaften (leichte Schlammfraktion) großflächig aus dem oberen Bereich des Klärbeckens abgezogen werden können, was die Trennung der Phasen schneller macht.

Vorzugsweise ist weiterhin vorgesehen, dass die Mittel zum Durchmischen und/oder Aufwirbeln der suspendierten Biomasse, die sich an einem Boden des Klärbeckens absetzt, durch die mindestens eine Zulaufleitung selbst gebildet wird bzw. werden, wobei beispielsweise durch eine unterseitige Anordnung der mindestens einen Zulaufleitung im Klärbecken dafür gesorgt werden kann, dass die an dem Boden abgesetzte suspendierte Biomasse automatisch durch das eingeleitete Abwasser durchmischt bzw. aufgewirbelt wird.

Vorzugsweise ist ergänzend vorgesehen, dass in dem unteren Bereich des Klärbeckens mindestens eine, vorzugsweise zwei Zulaufleitungen vorgesehen sind, die derartig im Behälter bzw. zueinander angeordnet sind, dass das Abwasser durch die mindestens eine, vorzugsweise mindestens zwei Zulaufleitungen in einem spiralförmigen Fluss in das Klärbecken eingelassen werden kann, um die suspendierte Biomasse, die sich an dem Boden des Klärbeckens absetzt, zu durchmischen und/oder aufzuwirbeln. Dadurch wird ein effektives in Kontaktbringen zwischen zu reinigendem Abwasser und der schweren Schlammfraktion ermöglicht.

Die Erfindung wird nachstehend anhand von Ausführungsbeispielen näher erläutert. Es zeigen:
- Fig. 1: ein Klärbecken eines Systems zum Erzeugen von granularem Schlamm in einer Detailansicht;
- Fig. 2: ein Flussdiagramm eines Verfahrens zum Erzeugen von granularem Schlamm; und
- Fig. 3, 4: Mikroskop-Aufnahmen eines abgescherten Biofilms und granularem Schlamm erzeugt in einem System nach Fig. 1 und mit einem Verfahren nach Fig. 2.

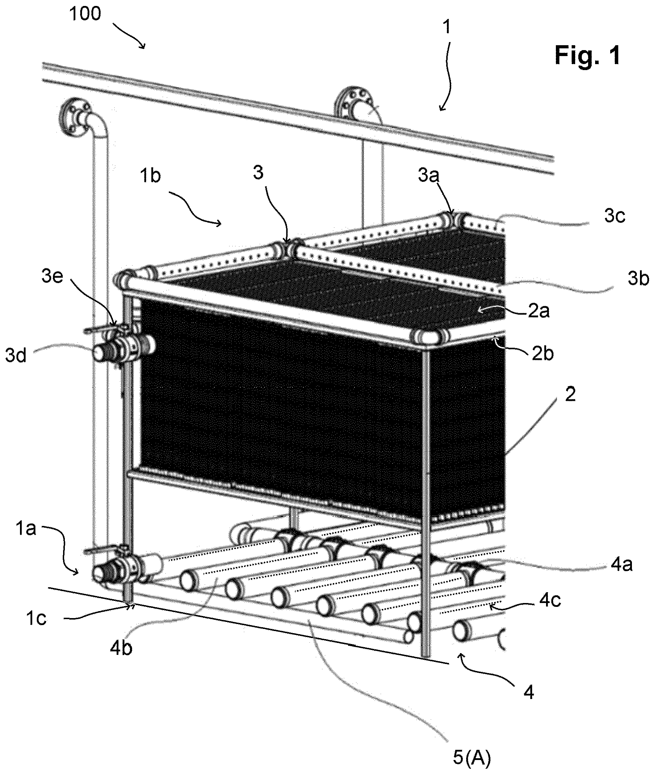

In Fig. 1 ist ein System 100 zum Erzeugen von granularem Schlamm Fgran mit einem Klärbecken 1 dargestellt, wobei in dem Klärbecken 1 ein Festbettmodul 2 mit einem integrierten (Schlammfraktions-)Separierungssystem 3, das sich in einem oberen Bereich 1b des Klärbeckens 1 oberhalb des Festbettmoduls 2 befindet, angeordnet ist. Das Festbettmodul 2 weist als Trägerkörper 2a beispielsweise mehrere an einem Gestell befestigte Schnüre in Form von synthetischen, abwasserbeständigen Textilien auf. Das Festbettmodul 2 ist ferner oberhalb eines Belüftungssystems 4 aus einer Hauptluftleitung 4a und mehreren Belüftungselementen 4b, beispielsweise Rohrbelüftern mit Löchern 4c bzw. Perforationen, platziert. Alternativ zu dem Festbettmodul 2 mit festen Trägerkörpern 2a könnte auch ein Wirbelbett 6 (in Fig. 1 nicht dargestellt) vorgesehen sein, dessen Trägerkörper 6a sich in dem in das Klärbecken 1 eingefüllten Abwasser A frei bewegen können.

In einem unteren Bereich 1a des Klärbeckens 1 bzw. knapp oberhalb eines Bodens 1c des Klärbeckens 1 ist unterhalb der Belüftungselemente 4b eine Zulaufleitung 5 angeordnet. In das Klärbecken 1 kann über diese Zulaufleitung 5 (Roh-)Abwasser A (Belebtschlamm) eingefüllt werden, um dieses in einem sog. SBR-Verfahren (SBR; Sequencing-Batch-Reactor) im Klärbecken 1 zu behandeln bzw. biologisch zu reinigen.

Im Rahmen dieses biologischen Behandlungsprozesses ist ergänzend vorgesehen, dass sich an den festen Trägerkörpern 2a des Festbettmoduls 2 (oder alternativ an den beweglichen Trägerkörpern 6a des Wirbelbetts 6) sessile Biomasse Bsess aus den in dem Abwasser A befindlichen Mikroorganismen ansiedeln. Das Abwasser A wird demnach im Klärbecken 1 an den Trägerkörpern 2a; 6a vorbeigeführt bzw. sind die Trägerkörper 2a; 6a in das Klärbecken 1 mit dem eingefüllten Abwasser A vollständig eingetaucht, wobei sich bereits angesiedelte sessile Mikroorganismen in der sessilen Biomasse Bsess von den Schadstoffen in dem verunreinigten Abwasser A ernähren und sich dadurch vermehren. Dadurch wächst die sessile Biomasse Bsess immer weiter an, wobei sich je nach Tiefe im Biofilm auch unterschiedlich aktive sessile Mikroorganismen befinden, die je nach Tiefe auch unterschiedliche schädliche Substanzen in dem Abwasser A abbauen können. Die sessilen Mikroorganismen sorgen für eine bestimmte Reinigungswirkung in dem Abwasser A, z.B. durch sogenannte Nitrifikation mit einer bestimmten sessilen Nitrifikationsrate und/oder durch Abbau organischer Substanzen.

Die sessilen Mikroorganismen in der sessilen Biomasse Bsess werden mit dem Belüftungssystem 4 über die Löcher 4c in den Belüftungselementen 4b mit Sauerstoff versorgt, da der Behandlungs- bzw. Reinigungsprozess einen hohen Sauerstoffbedarf hat. Durch die Löcher 4c können demnach Luftblasen L einer bestimmten Intensität in das Abwasser A eingelassen werden, wobei diese Luftblasen L aufgrund der Positionierung des Belüftungssystems 4 auch an den Trägerkörpern 2a; 6a vorbeigeführt werden, so dass auch die sessilen Mikroorganismen mit Sauerstoff für den Behandlungs- bzw. Reinigungsprozess versorgt werden können. Dadurch kann das Wachstum der sessilen Biomasse Bsess auf dem jeweiligen Trägerkörper 2a; 6a begünstigt werden.

Als weiterer biologisch aktiver Bestandteil des Systems 100 befinden sich im Klärbecken 1 suspendierte Mikroorganismen, die in der Suspension, d.h. dem schlammartigen Abwasser A, auch abseits der Trägerkörper 2a; 6a schwimmen bzw. schweben, beispielsweise als suspendierte Biomasse Bsus in Form von suspendierten Schlammflocken Fsus. Auch diese suspendierten Mikroorganismen werden von den Luftblasen L des Belüftungssystems 4 mit Sauerstoff versorgt, um am Behandlungs- bzw. Reinigungsprozess beitragen zu können. Die suspendierten Mikroorganismen tragen ebenfalls zum Abbau von Schadstoffen in dem Abwasser A bei, so dass der Behandlungs- bzw. Reinigungsprozess sowohl durch die suspendierte Biomasse Bsus als auch durch die sessile Biomasse Bsess beeinflusst wird.

In einem solchen System 100, das im Rahmen des SBR-Verfahrens betrieben werden kann, kann der Behandlungs- bzw. Reinigungsprozess des Abwassers A durch ein zusätzliches Erzeugen von granularem Schlamm Fgran wie folgt optimiert werden:
Die direkte Anordnung des Belüftungssystems 4 unter dem Festbettmodul 2 bzw. dem Wirbelbett 6 verfolgt das Ziel, dass die Luftblasen L direkt auf die sessile Biomasse Bsess auf dem jeweiligen Trägerkörper 2a; 6a einwirken und diese dadurch je nach Intensität I auch ablösen bzw. abscheren können. Dabei kann beispielsweise durch eine intermittierende Belüftung, d.h. eine Belüftung mit sich ändernder Intensität I der Luftblasen L, aufgrund von sich ständig ändernden Bedingungen gezielt ein höheres Stressniveau in Form einer Scherspannung auf die sessile Biomasse Bsess erzeugt werden. In der Folge kann die sessile Biomasse Bsess effizient vom jeweiligen Trägerkörper 2a; 6a abgelöst werden. Grundsätzlich könnte aber auch eine gleichwirkende Vorrichtung zum Abscheren der sessilen Biomasse Bsess, beispielsweise eine mechanische Vorrichtung (nicht dargestellt), vorgesehen sein. Bei einem Wirbelbett 6 kann es zudem aufgrund von Kollisionen bzw. Berührungen der sich bewegenden Trägerkörper 6a zu einem mechanischen Abscheren bzw. Ablösen kommen.

Nach einer solchen Abscherung geht die abgelöste sessile Biomasse Bsess in Form eines abgescherten Biofilms Fshear in das Abwasser A bzw. in die Suspension über und sorgt in dieser ebenfalls für eine Behandlung bzw. Reinigung des Abwassers A. Der abgescherte Biofilm Fshear besitzt dabei eine vergleichsweise hohe Dichte gegenüber den von vornherein vorhandenen suspendierten Schlammflocken Fsus in der Suspension, so dass sich der abgescherte Biofilm Fshear mit einer hohen Absetzgeschwindigkeit in Richtung des Bodens 1c des Klärbeckens 1 absetzen kann.

Mit dem gezielten Abscheren der sessilen Biomasse Bsess kann also im Klärbecken 1 für das SBR-Verfahren eine suspendierte Biomasse Bsus bereitgestellt werden, die besteht aus:
- den suspendierten Schlammflocken Fsus mit schlechten Absetzeigenschaften, die im Folgenden als leichte Schlammfraktion SI bezeichnet wird und die sich auch in herkömmlichen SBR-Verfahren ohne Abscherung wiederfinden lassen, sowie
- dem abgescherten Biofilm Fshear, der aufgrund der vergleichsweise hohen Dichte gute Absetzeigenschaften aufweist und im Folgenden als schwere Schlammfraktion Sh bezeichnet wird.

Um die schwere Schlammfraktion Sh in der Suspension weiter anzureichern und eine klare Trennung zwischen der festen Phase (Fsus, Fshear) und der flüssigen Phase, d.h. dem gereinigten Klarwasser K, im Klärbecken 1 zu erhalten, wird die leichte Schlammfraktion SI regelmäßig mittels des Separierungssystems 3 aus dem Klärbecken 1 entnommen bzw. abgezogen. Im Klärbecken 1 verbleibt dann hauptsächlich die schwere Schlammfraktion Sh, die sich schnell am Boden 1c des Klärbeckens 1 absetzt und die dadurch vom Klarwasser K getrennt wird.

Das Separierungssystem 3 setzt sich dazu aus einer Rohrkonstruktion 3a mit Rohrleitungen 3b zusammen, die oberseitig auf dem Rahmen 2b des Festbettmoduls 2 verläuft, vorzugsweise daran befestigt ist. Bei Verwendung eines Wirbelbetts 6 befindet sich das Separierungssystem 3 vorzugsweise in einem mittleren Bereich des Klärbeckens 1, d.h. im Wesentlichen unterhalb des Wirbelbetts 6. Die Rohrleitungen 3b der Rohrkonstruktion 3a weisen eine Perforation 3c auf, durch die Abwasser A mit Schlammpartikeln in die Rohrleitungen 3b und in mindestens eine Ablaufleitung 3d abgeleitet werden kann. Wie exemplarisch in Fig. 1 dargestellt, kann das derart abgeleitete Abwasser A dem Prozess zum Beispiel über ein Ventil 3e und die Schwerkraft über die Ablaufleitung 3d gezielt bzw. kontrolliert entnommen werden.

Da die Rohrkonstruktion 3a eine große Fläche bzw. Ebene oberhalb des Festbettmoduls 2 bzw. alternativ unterhalb des Wirbelbetts 6 abdeckt bzw. umgibt, kann in regelmäßigen Zeitabständen ein Großteil der leichten Schlammfraktion SI, die aufgrund der schlechten Absetzeigenschaften weiterhin im oberen Bereich 1b des Klärbeckens 1 schwebt, durch Öffnen des Ventils 3e effizient über die perforierten Rohrleitungen 3b abgezogen bzw. entnommen werden.

Die feste Phase in der Suspension wird dann im Wesentlichen nur noch aus dem sich schnell absetzenden, abgescherten Biofilm Fshear gebildet, so dass das Separierungssystem 3 eine schnelle Trennung der festen Phase (Fshear) und der flüssigen Phase (Klarwasser K) begünstigt. Damit ergibt sich eine bereits effiziente Anreicherung der schweren Schlammfraktion Sh am Boden 1c bzw. im unteren Bereich 1a des Klärbeckens 1.

Für die Erzeugung des granularen Schlamms Fgran spielt neben dieser Selektion bzw. Trennung die Weiterentwicklung des abgescherten Biofilms Fshear in der schweren Schlammfraktion Sh eine entscheidende Rolle, was dadurch erfolgt, dass der abgescherte Biofilm Fshear gezielt mit dem eingefüllten Abwasser A in Kontakt gebracht wird. Dies wird dadurch optimiert, dass das verunreinigte Abwasser A unterhalb des Belüftungssystems 4 über die Zulaufleitung 5 direkt in die bereits am Boden 1c abgesetzte schwere Schlammfraktion Sh bzw. den abgescherten Biofilm Fshear eingespeist wird.

Dabei wird durch das unterseitige Einspeisen eine gezielte Durchmischung der Wasser-Biomasseebene im unteren Bereich 1a des Klärbeckens 1 erreicht, wodurch es zu einem gleichmäßigen Kontakt zwischen dem eingeleiteten Abwasser A und der schweren Schlammfraktion Sh bzw. dem abgescherten Biofilm Fshear kommt. Dadurch kann ein Großteil des abgescherten Biofilms Fshear mit Substrat aus dem Abwasser A versorgt werden, um wie folgt granularen Schlamm Fgran auszubilden:
Dabei wird ausgenutzt, dass sich aufgrund der Eigenschaften der sessilen Biomasse Bsess bzw. des abgescherten Biofilms Fshear an der Oberfläche des abgescherten Biofilms Fshear langsam wachsende Mikroorganismen befinden, die das Substrat aus dem Abwasser A nicht so schnell aufnehmen können. Dadurch kann das Substrat aus dem Abwasser A besonderes gut in den abgescherten Biofilm Fshear eindringen bzw. eindiffundieren und damit einfacher in tiefere Schichten des abgescherten Biofilms Fshear gelangen und diesen versorgen.

Die langsam wachsenden Mikroorganismen kultivieren sich dabei durch die Umwandlung des leicht abbaubaren CSBs (chemischer Sauerstoffbedarf) in Speicherpolymere wie beispielsweise Polyhydroxyalkanoate (PHA) und/oder dadurch, dass in dem abgescherten Biofilm Fshear Kerne bzw. Keimzellen (nuclei) bereitgestellt werden. Diese bilden sich in der sessilen Biomasse Bsess während des Wachstumsprozesses auf dem mindestens einen Trägerkörper 2a, 6a aus und werden demnach ebenfalls mit abgeschert. An diesen Kernen bzw. Keimzellen kann sich Biomasse, insbesondere die langsam anwachsenden Mikroorganismen, kultivieren bzw. ansiedeln.

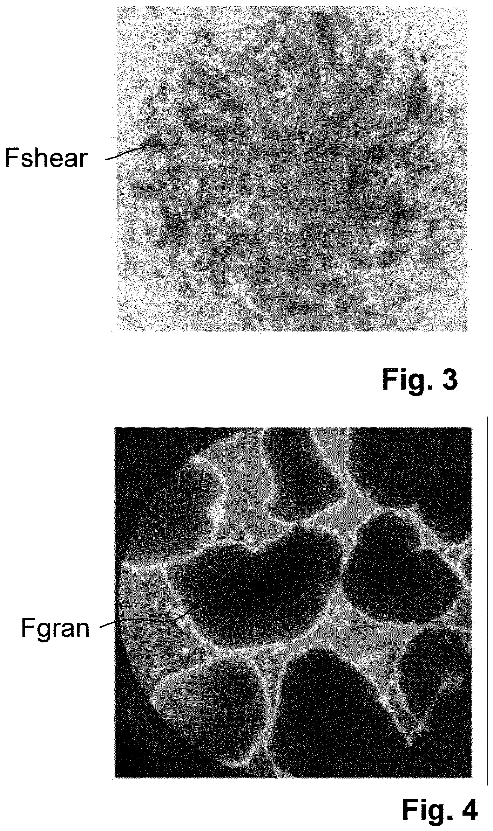

Daher wird für den erfindungsgemäßen Granulierungsprozess ausgenutzt, dass die sessile Biomasse Bsess durch ihren längeren Verbleib auf dem mindestens einen Trägerkörper 2a, 6a besondere Eigenschaften aufweist, die eine vollständige Versorgung mit Substrat aus dem Abwasser A gewährleisten können. Dadurch wird der abgescherte Biofilm Fshear in kürzester Zeit in granularen Schlamm Fgran, d.h. in Granulat oder granulatähnliche Biomasse, umgewandelt. Beispielhaft ist dieser granulare Schlamm Fgran in Fig. 4 dargestellt, wobei dieser wie beschrieben aus der abgescherter Biomasse Fshear, wie sie beispielhaft in Fig. 3 dargestellt ist, umgewandelt wurde. Dieser erzeugte granulare Schlamm Fgran wird nachfolgend als Bestandteil der (sich schnell absetzenden) suspendierten Biomasse Bsus bzw. der schweren Schlammfraktion Sh gezielt im Behandlungs- bzw. Reinigungsprozess gehalten und gezielt zur biologischen Behandlung des verunreinigten Abwassers A verwendet.

Gegenüber herkömmlichen Granulierungsprozessen findet dabei eine deutlich schnellere Umwandung hin zu granularem Schlamm Fgran statt, da diese Umwandlung nicht aus der sich langsam absetzenden suspendierten Biomasse Bsus erfolgt, sondern aus dem sich schnell absetzenden abgescherten Biofilm Fshear, der durch die Auflockerung bzw. Durchmischung gezielt mit dem eingeleiteten Abwasser A in Kontakt gebracht wird. So kann mit diesem Verfahren beispielsweise unter zumindest einer Halbierung der Umwandlungszeit aus herkömmlichen Granulierungsprozessen, die unter denselben Umgebungsbedingungen (Temperatur, Belastung, etc.) stattfinden, aus dem abgescherten Biofilm Fshear wie beschrieben granularer Schlamm Fgran erzeugt werden.

Zum Ermöglichen des gleichmäßigen Kontakts zwischen dem eingeleiteten Abwasser A und dem abgescherten Biofilm Fshear in der abgesetzten, suspendierten Biomasse Bsus können eine oder auch mehrere Zulaufleitungen 5 im unteren Bereich 1a des Klärbeckens 1 derartig angeordnet werden, dass sich ein spiralförmiger Fluss des verunreinigten Abwassers A im unteren Bereich 1a des Klärbeckens 1 ergibt. Auf diese Weise wird der abgesetzte, abgescherte Biofilm Fshear am Boden 1c des Klärbeckens effektiv aufgewirbelt und das Abwasser A kann mit diesem im großen Umfang in Wechselwirkung treten, um dann eine effiziente bzw. schnelle Umwandlung in granularen Schlamm Fgran zu erreichen.

Es ist aber auch denkbar, dass ergänzend ein Rührwerk 7 (in Fig. 1 nicht dargestellt) und/oder ein ergänzendes Belüftungssystem (nicht dargestellt), das vorzugsweise eine grobbläsige oder stoßweise Belüftung umsetzt, als Mittel zum Durchmischen und/oder Aufwirbeln der suspendierten Biomasse Bsus samt abgeschertem Biofilm Fshear vorgesehen ist bzw. sind, die für ein Aufwirbeln des abgesetzten, abgescherten Biofilms Fshear sorgen können. Auf diese Weise ist auch ein oberseitiges Einfüllen des zu behandelnden Abwassers A in das Klärbecken 1 möglich, das dann mit dem durch das Rührwerk 7 oder durch das zusätzliche Belüftungssystem aufgelockerten abgescherten Biofilm Fshear in Kontakt gebracht werden kann, um diesen in granularen Schlamm Fgran umzuwandeln.

Im Gegensatz zu herkömmlichen Granulierungsprozessen wird also in der vorliegenden Erfindung in einem SBR-Reaktor gezielt mindestens ein Trägerkörper 2a, 6a (z.B. eines Festbettmoduls 2 oder eines Wirbelbetts 6) eingesetzt, um einen sich schnell absetzenden abgescherte Biofilm Fshear in der Suspension bereitzustellen und diesen, nachdem er sich am Boden 1c des Klärbeckens 1 abgesetzt hat, durch Umwandlungsprozesse, die unter der speziellen Zuführung des Abwasser A bzw. des in Kontaktbringens mit dem Abwasser A stattfinden, in schnellster Zeit in granularen Schlamm Fgran umzuwandeln. Dieser kann dann in der Folge für eine sehr effiziente Behandlung des Abwasser A eingesetzt werden, so dass sich im eigentlichen Behandlungsprozess insgesamt schnellere Reinigungszyklen erreichen lassen.

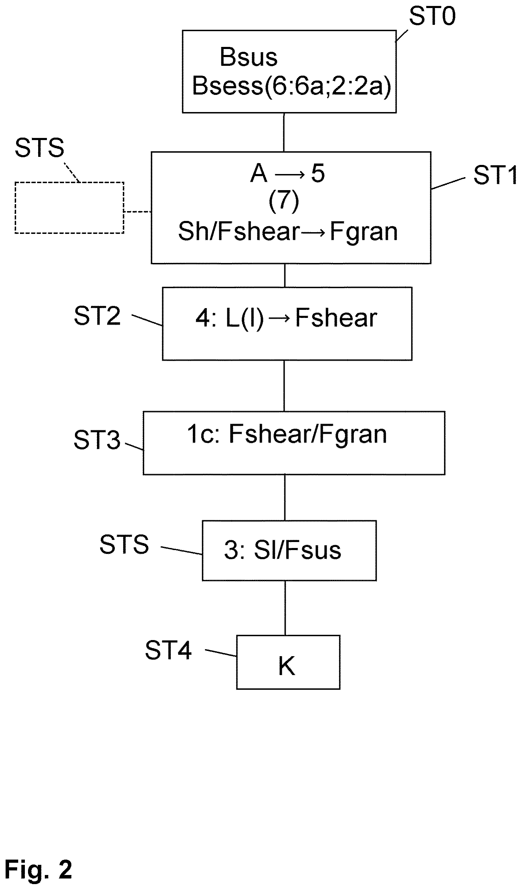

Das Erzeugen von granularem Schlamm Fgran im Rahmen eines SBR-Prozesses wird dann zyklisch durchgeführt und unterteilt sich in mehrere in Fig. 2 beispielhaft dargestellte Phasen, dem Befüllen (ST1), dem Belüften (ST2), dem Absetzen (ST3) und der anschließenden Dekantierung (ST4). Die Erzeugung des granularen Schlamms Fgran findet dabei parallel zum Behandlungs- bzw. Reinigungsprozess statt:
Zu Beginn (ST0) eines (Reinigungs-)Zyklus bzw. am Ende des vorherigen Zyklus ist die SBR-Zone, in der die Behandlung des Abwassers A gemäß dem SBR-Verfahren innerhalb des Klärbeckens 1 erfolgt, teilweise (ca. 50%) mit vorgereinigtem Klarwasser K aus dem vorangehenden Zyklus sowie mit einem Mix aus suspendierter Biomasse Bsus (Fsus, Fshear, ggf. Fgran), die sich durch das Absetzen im letzten Zyklus konzentriert am Boden 1c bzw. unteren Bereich 1a des Klärbeckens 1 befindet, und sessiler Biomasse Bsess, die sich an dem Festbettmodul 2 oder im Wirbelbett 6 an den jeweiligen Trägerkörpern 2a, 6a befindet, befüllt.

Der Zyklus startet in einem ersten Schritt ST1 mit dem Befüllen des Klärbeckens 1 mit (Roh-)Abwasser A über die mindestens eine unterhalb (s. Fig. 1) des Belüftungssystems 4 befindliche(n) Zulaufleitung(en) 5, z.B. in der oben beschriebenen Weise durch Erzeugen eines spiralförmigen Flusses. Durch diese Art des Befüllens findet wie beschrieben eine Durchmischung bzw. ein Aufwirbeln der abgesetzten schweren Schlammfraktion Sh bzw. des abgescherten Biofilms Fshear und dadurch gleichzeitig ein gleichmäßiger Kontakt dieser suspendierten Biomasse Bsus mit dem Abwasser A unter anoxischen Bedingungen statt. In kurzer Zeit findet dadurch wie beschrieben durch ineinandergreifende Prozesse über einen sehr kurzen Zeitraum eine Umwandlung des abgescherten Biofilms Fshear hin zu granularem Schlamm Fgran statt, der nachfolgend gezielt als Bestandteil der suspendierten Biomasse Bsus im Behandlungsprozess gehalten und zur biologischen Behandlung des verunreinigten Abwassers A verwendet wird. Alternativ kann bei einem oberseitigen Befüllen über ein Rührwerk 7 ein Durchmischen bzw. Aufwirbeln der abgesetzten schweren Schlammfraktion Sh erfolgen.

In einem zweiten Schritt ST2 folgt die Phase der Belüftung, insbesondere der intermittierenden Belüftung oder auch eine Kombination aus kontinuierlichen Belüftungszeiträumen und anschließenden Zeitfenstern mit impulsartiger Belüftung, mit dem Ziel das Abscheren bzw. Ablösen der sessilen Biomasse Bsess zu erleichtern. Dabei findet durch die Anordnung des Belüftungssystems 4 direkt unter dem Festbettmodul 2 gleichzeitig zur Belüftung auch eine effektive Abscherung der sessilen Biomasse Bsess wie oben beschrieben statt.

Hierauf folgt in einem dritten Schritt ST3 die Absetzphase, in der sich die suspendierte Biomasse Bsus, d.h. die suspendierten Schlammflocken Fsus und der abgescherte Biofilm Fshear (und ggf. bereits vorhandener granularer Schlamm Fgran), in dem Klärbecken 1 mit der jeweiligen Absetzgeschwindigkeit absetzt. Vor Vollendung des Absetzprozesses wird in einem Separierungs-Schritt STS die suspendierte Biomasse Bsus, insbesondere die suspendierten Schlammflocken Fsus bzw. die leichte Schlammfraktion SI, welche eine niedrige Absetzgeschwindigkeit aufweist und sich dementsprechend noch in Schwebe befindet, über das Separierungssystem 3 oberhalb des Festbettmoduls 2 großflächig dem SBR-Prozess entzogen (wie oben beschrieben).

Optional kann der Separierungs-Schritt STS auch bereits während des Befüllens bzw. parallel zum Befüllen im ersten Schritt ST1 erfolgen. Liegt der Wasserspiegel im Klärbecken 1 oberhalb der perforierten Rohrleitungen 3b kann das Separierungssystem 3 über das Ventil 3e oder dgl. in Betrieb genommen werden. Daraufhin wird die leichte Schlammfraktion SI der suspendierten Biomasse Bsus, die durch das Befüllen bereits aufgewirbelt wird, aus dem Klärbecken 1 dem SBR-Prozess entnommen. Durch geeignete Wahl der Befüllgeschwindigkeit des Abwassers A im Befüllprozess über die Zulaufleitung(en) 5 kann beeinflusst werden, wie viel und welche Schlammfraktion Sh, SI aufgewirbelt wird, wobei die leichte Schlammfraktion SI mit den suspendierten Schlammflocken Fsus schneller aufgewirbelt wird als die schwere Schlammfraktion Sh mit dem abgescherten Biofilm Fshear und/oder dem granularen Schlamm Fgran (falls schon vorhanden), die im SBR-Prozess verbleiben soll(en).

Nachdem die Trennung/Separierung der suspendierten Biomasse Bsus mit der schweren Schlammfraktion Sh (feste Phase) von dem aufbereiteten Klarwasser K (flüssige Phase) durch Absetzen vollzogen ist, wird diese klare Wasserphase in einem vierten Schritt ST4 mittels eines Dekanters aus dem SBR-Reaktor als Produkt des SBR-Prozesses abgezogen. Nach der Entnahme des aufbereiteten Klarwassers K beginnt der Zyklus von vorne.

### Bezugszeichenliste

- 1: Klärbecken
- 1a: unterer Bereich des Klärbeckens 1
- 1b: oberer Bereich des Klärbeckens 1
- 1c: Boden des Klärbeckens 1
- 2: Festbettmodul
- 2a: Trägerkörper
- 2b: Rahmen des Festbettmoduls 2
- 3: Separierungssystem
- 3a: Rohrkonstruktion
- 3b: Rohrleitung
- 3c: Perforation in der Rohrleitung 3b
- 3d: Ablaufleitung
- 3e: Ventil in der Ablaufleitung 3d
- 4: Belüftungssystem
- 4a: Hauptluftleitung
- 4b: Belüftungselement
- 4c: Löcher in dem Belüftungselement 4b
- 5: Zulaufleitung
- 6: Wirbelbett
- 6a: Trägerkörper des Wirbelbetts 6
- 7: Rührwerk
- 100: Abwasserbehandlungssystem
- A: Rohabwasser
- Bsess: sessile Biomasse
- Bsus: suspendierte Biomasse
- Fgran: granularer Schlamm
- Fshear: abgescherter Biofilm
- Fsus: suspendierte Schlammflocken
- I: Intensität
- K: Klarwasser
- L: Luftblasen
- SI: leichte Schlammfraktion
- Sh: schwere Schlammfraktion

## Patentansprüche

1. Verfahren zum Erzeugen von granularem Schlamm (Fgran) in einem System (100) mit mindestens einem mit Abwasser (A) gefüllten Klärbecken (1), wobei sich in dem Klärbecken (1) mindestens ein Trägerkörper (2a, 6a) befindet, an dem jeweils sessile Biomasse (Bsess) anwachsen kann, und wobei sich in dem Abwasser (A) ferner suspendierte Biomasse (Bsus) befindet, wobei die sessile Biomasse (Bsess) regelmäßig von dem mindestens einen Trägerkörper (2a, 6a) derart abgeschert wird, dass sich ein abgescherter Biofilm (Fshear) bildet, der als suspendierte Biomasse (Bsus) in das Abwasser (A) im Klärbecken (1) übergeht, wobei in mehreren Zyklen jeweils mindestens die folgenden Schritte durchgeführt werden:
- Befüllen des Klärbeckens (1) mit verunreinigtem Abwasser (A) über mindestens eine Zulaufleitung (5),
- Durchmischen und/oder Aufwirbeln von suspendierter Biomasse (Bsus), die sich an einem Boden (1c) des Klärbeckens (1) absetzt oder abgesetzt hat (ST1), um das eingefüllte verunreinigte Abwasser (A) mit der abgesetzten suspendierten Biomasse (Bsus) derartig in Kontakt zu bringen, dass sich ein bereits von dem mindestens einen Trägerkörper (2a, 6a) abgescherter Biofilm (Fshear) als Bestandteil der suspendierten Biomasse (Bsus) nachfolgend in granularen Schlamm (Fgran) umwandelt;
- Belüften der sessilen Biomasse (Bsess) und der suspendierten Biomasse (Bsus) mit einem in einem unteren Bereich (1b) des Klärbeckens (1) angeordneten Belüftungssystem (4),
- Abscheren der sessilen Biomasse (Bsess) von dem mindestens einen Trägerkörper (2a, 6), so dass der abgescherte Biofilm (Fshear) als suspendierte Biomasse (Bsus) in das Abwasser (A) im Klärbecken (1) übergeht (ST2);
- Warten, bis sich der abgescherte Biofilm (Fshear) aus der suspendierten Biomasse (Bsus) in dem unteren Bereich (1a) oder an dem Boden (1c) des Klärbeckens (1) absetzt und bis sich in einem oberen Bereich (1b) des Klärbeckens (1) Klarwasser (K) abgetrennt von der suspendierten Biomasse (Bsus) befindet (ST3),
wobei dazu in einem Separierungs-Schritt (STS) innerhalb eines Reinigungszyklus suspendierte Schlammflocken (Fsus) und/oder eine leichte Schlammfraktion (SI) aus der suspendierten Biomasse (Bsus), die in dem oberen Bereich (1b) des Klärbeckens (1) schweben, abgezogen werden; und
- Entnehmen des biologisch gereinigten Klarwassers (K) aus dem oberen Bereich (1b) des Klärbeckens (1) (ST4).

2. Verfahren nach Anspruch 1, **dadurch gekennzeichnet, dass** das Abscheren der sessilen Biomasse (Bsess) gleichzeitig mit dem Belüften der sessilen Biomasse (Bsess) und der suspendierten Biomasse (Bsus) dadurch erfolgt, dass die von einem Belüftungssystem (3) mit einer Intensität (I) in das Abwasser (A) eingelassenen Luftblasen (L) die sessile Biomasse (Bsess) vom Trägerkörper (2a, 6a) abscheren, insbesondere durch Einstellen einer sich ändernden Intensität (I) der Luftblasen (L).

3. Verfahren nach Anspruch 1 oder 2, **dadurch gekennzeichnet, dass** das Abwasser (A) derartig in Kontakt mit dem abgescherten Biofilm (Fshear) gebracht wird, dass Substrat aus dem Abwasser (A) in den abgescherten Biofilm (Fshear) eindringen und diesen dadurch versorgen kann, wodurch sich der abgescherte Biofilm (Fshear) in granularen Schlamm (Fgran) umwandelt.

4. Verfahren nach einem der vorhergehenden Ansprüche, **dadurch gekennzeichnet, dass** die suspendierten Schlammflocken (Fsus) und/oder die leichte Schlammfraktion (SI) aus der suspendierten Biomasse (Bsus), die in dem oberen Bereich (1b) des Klärbeckens (1) schweben,
- während des Befüllens des Klärbeckens (1) mit verunreinigtem Abwasser (A) (ST1), und/oder
- während des Wartens, bis sich der abgescherte Biofilm (Fshear) aus der suspendierten Biomasse (Bsus) in dem unteren Bereich (1a) oder an dem Boden (1c) des Klärbeckens (1) absetzen,
abgezogen werden, so dass sich nachfolgend in dem oberen Bereich (1b) des Klärbeckens (1) Klarwasser (K) abgetrennt von der suspendierten Biomasse (Bsus) befindet.

5. Verfahren nach einem der vorhergehenden Ansprüche, **dadurch gekennzeichnet, dass** das Durchmischen und/oder Aufwirbeln von suspendierter Biomasse (Bsus), die sich an einem Boden (1c) des Klärbeckens (1) absetzt, dadurch erfolgt, dass das Abwasser (A) in dem unteren Bereich (1a) des Klärbeckens (1), in dem sich auch die abgesetzte suspendierte Biomasse (Bsus) befindet, über die mindestens eine Zulaufleitung (5) in das Klärbecken (1) eingefüllt wird.

6. Verfahren nach Anspruch 5, **dadurch gekennzeichnet, dass** das Befüllen des Klärbeckens (1) mit verunreinigtem Abwasser (A) über mindestens eine, vorzugsweise zwei Zulaufleitungen (5) (ST1) derartig erfolgt, dass ein spiralförmiger Fluss erzeugt wird, um die suspendierte Biomasse (Bsus), die sich in einem unteren Bereich (1a) und/oder am Boden (1c) des Klärbeckens (1) absetzt, zu durchmischen und/oder aufzuwirbeln.

7. Verfahren nach einem der vorhergehenden Ansprüche, **dadurch gekennzeichnet, dass** der mindestens eine Trägerkörper (2a, 6a) Bestandteil eines Festbettmoduls (2) oder Bestandteil eines Wirbelbetts (6) innerhalb des Klärbeckens (1) ist, wobei das Belüftungssystem (4) unterhalb des Festbettmoduls (2) oder des Wirbelbetts (6) angeordnet ist.

8. Verfahren nach einem der vorhergehenden Ansprüche, **dadurch gekennzeichnet, dass** das Verfahren in mehreren Reinigungszyklen im Rahmen eines SBR-Prozesses durchgeführt wird.

9. System (100) zum Erzeugen von granularem Schlamm (Fgran), insbesondere nach einem Verfahren gemäß einem der vorhergehenden Ansprüche, mit mindestens einem Klärbecken (1), mindestens aufweisend:
- eine Zulaufleitung (5), durch die Abwasser (A) in das Klärbecken (1) eingefüllt werden kann,
- Mittel zum Durchmischen und/oder Aufwirbeln von suspendierter Biomasse (Bsus), die sich an einem Boden (1c) des Klärbeckens (1) abgesetzt hat, um das eingefüllte verunreinigte Abwasser (A) mit der abgesetzten suspendierten Biomasse (Bsus) derartig in Kontakt bringen zu können, dass sich ein abgescherter Biofilm (Fshear) als Bestandteil der suspendierten Biomasse (Bsus) nachfolgend in granularen Schlamm (Fgran) umwandeln kann,
- mindestens ein Trägerkörper (2a, 6a), an dem jeweils sessile Biomasse (Bsess) anwachsen kann,
- ein Belüftungssystem (4) mit Belüftungselementen (4b) mit Löchern (4c) zum Einlassen von Luftblasen (L) in das eingefüllte Abwasser (A) in dem Klärbecken (1), wobei das Belüftungssystem (4) unterhalb des mindestens einen Trägerkörpers (2a, 6a) angeordnet ist,
- eine Vorrichtung zum Abscheren der sessilen Biomasse (Bsess) von dem mindestens einen Trägerkörper (2a, 6a) derartig, dass sich der abgescherte Biofilm (Fshear) ausbilden kann und dieser als suspendierte Biomasse (Bsus) in das Abwasser (A) im Klärbecken (1) übergehen kann;
- ein Separierungssystem (3) mit perforierten Rohrleitungen (3b), wobei das Separierungssystem (3) in einem oberen Bereich (1b) des Klärbeckens (1) angeordnet ist und ausgebildet ist, suspendierte Schlammflocken (Fsus) und/oder eine leichte Schlammfraktion (SI) aus der suspendierten Biomasse (Bsus), die in dem oberen Bereich (1b) des Klärbeckens (1) schweben, abzuziehen; und
- Mittel zum Entnehmen von biologisch gereinigtem Klarwasser (K) aus dem oberen Bereich (1b) des Klärbeckens (1).

10. System (100) nach Anspruch 9, **dadurch gekennzeichnet, dass** die Vorrichtung zum Abscheren der sessilen Biomasse (Bsess) von dem mindestens einen Trägerkörper (2a) durch das Belüftungssystem (4) gebildet ist, das Luftblasen (L) mit einer derartigen Intensität (I) erzeugen und in das Abwasser (A) einlassen kann, dass sich die sessile Biomasse (Bsess) von dem mindestens einen Trägerkörper (2a, 6a) ablösen und als abgescherte Biomasse (Fshear) in das Abwasser (A) übergehen kann.

11. System (100) nach einem der Ansprüche 9 oder 10, **dadurch gekennzeichnet, dass** der mindestens eine Trägerkörper (2a, 6a) Bestandteil eines Festbettmoduls (2) oder eines Wirbelbetts (6) ist.

12. System (100) nach einem der Ansprüche 9 bis 11, **dadurch gekennzeichnet, dass** das Separierungssystem (3) aus einer Rohrkonstruktion (3a) gebildet ist, die aus mehreren ausgedehnten perforierten Rohrleitungen (3b) zusammengesetzt ist, wobei die Rohrleitungen (3b) und/oder die Rohrkonstruktion (3a) in einem oberen Bereich (1a) des Klärbeckens (1) angeordnet ist, beispielsweise oberhalb auf einem Rahmen (2b) des Festbettmoduls (2) befestigt ist.

13. System (100) nach einem der Ansprüche 9 bis 12, **dadurch gekennzeichnet, dass** die Mittel zum Durchmischen und/oder Aufwirbeln von suspendierter Biomasse (Bsus), die sich an einem Boden (1c) des Klärbeckens (1) abgesetzt hat, durch die mindestens eine Zulaufleitung (5) und/oder ein Rührwerk (7) gebildet wird/werden.

14. Abwasserbehandlungssystem (100) nach Anspruch 13, **dadurch gekennzeichnet, dass** die mindestens eine Zulaufleitung (5) als Mittel zum Durchmischen und/oder Aufwirbeln von suspendierter Biomasse (Bsus), die sich an einem Boden (1c) des Klärbeckens (1) abgesetzt hat, in dem unteren Bereich (1a) des Klärbeckens (1) vorgesehen ist, wobei die mindestens eine Zulaufleitung (5) vorzugsweise derartig angeordnet ist, dass das Abwasser (A) durch die mindestens eine Zulaufleitung (5) in einem spiralförmigen Fluss in das Klärbecken (1) eingelassen werden kann, um die suspendierte Biomasse (Bsus), die sich an dem Boden (1c) des Klärbeckens (1) absetzt, zu durchmischen und/oder aufzuwirbeln.

## Geänderte Patentansprüche

### Geänderte Patentansprüche gemäss Regel 137(2) EPÜ.

1. Verfahren zum Erzeugen von granularem Schlamm (Fgran) in einem System (100) mit mindestens einem mit Abwasser (A) gefüllten Klärbecken (1), wobei sich in dem Klärbecken (1) mindestens ein Trägerkörper (2a, 6a) befindet, an dem jeweils sessile Biomasse (Bsess) anwachsen kann, wobei der mindestens eine Trägerkörper (2a, 6a) Bestandteil eines Festbettmoduls (2) oder Bestandteil eines Wirbelbetts (6) innerhalb des Klärbeckens (1) ist, und wobei sich in dem Abwasser (A) ferner suspendierte Biomasse (Bsus) befindet, wobei die sessile Biomasse (Bsess) regelmäßig von dem mindestens einen Trägerkörper (2a, 6a) derart abgeschert wird, dass sich ein abgescherter Biofilm (Fshear) bildet, der als suspendierte Biomasse (Bsus) in das Abwasser (A) im Klärbecken (1) übergeht, wobei in mehreren sich wiederholenden Zyklen jeweils mindestens die folgenden Schritte durchgeführt werden:
- Befüllen des Klärbeckens (1) mit verunreinigtem Abwasser (A) über mindestens eine Zulaufleitung (5),
- Durchmischen und/oder Aufwirbeln von suspendierter Biomasse (Bsus), die sich an einem Boden (1c) des Klärbeckens (1) absetzt oder abgesetzt hat (ST1), um das eingefüllte verunreinigte Abwasser (A) mit der abgesetzten suspendierten Biomasse (Bsus) derartig in Kontakt zu bringen, dass sich ein bereits von dem mindestens einen Trägerkörper (2a, 6a) abgescherter Biofilm (Fshear) als Bestandteil der suspendierten Biomasse (Bsus) nachfolgend in granularen Schlamm (Fgran) umwandelt;
- Belüften der sessilen Biomasse (Bsess) und der suspendierten Biomasse (Bsus) mit einem in einem unteren Bereich (1b) des Klärbeckens (1) angeordneten Belüftungssystem (4), wobei das Belüftungssystem (4) unterhalb des Festbettmoduls (2) oder des Wirbelbetts (6) angeordnet ist,
- Abscheren der sessilen Biomasse (Bsess) von dem mindestens einen Trägerkörper (2a, 6), so dass der abgescherte Biofilm (Fshear) als suspendierte Biomasse (Bsus) in das Abwasser (A) im Klärbecken (1) übergeht (ST2);
- Warten in einer Absetzphase, bis sich der abgescherte Biofilm (Fshear) aus der suspendierten Biomasse (Bsus) in dem unteren Bereich (1a) oder an dem Boden (1c) des Klärbeckens (1) absetzt und bis sich in einem oberen Bereich (1b) des Klärbeckens (1) Klarwasser (K) abgetrennt von der suspendierten Biomasse (Bsus) befindet (ST3), wobei dazu in einem Separierungs-Schritt (STS) innerhalb eines Reinigungszyklus suspendierte Schlammflocken (Fsus) und/oder eine leichte Schlammfraktion (Sl) aus der suspendierten Biomasse (Bsus), die in dem oberen Bereich (1b) des Klärbeckens (1) schweben, abgezogen werden; und
- Entnehmen des biologisch gereinigten Klarwassers (K) aus dem oberen Bereich (1b) des Klärbeckens (1) (ST4).

2. Verfahren nach Anspruch 1, **dadurch gekennzeichnet, dass** das Abscheren der sessilen Biomasse (Bsess) gleichzeitig mit dem Belüften der sessilen Biomasse (Bsess) und der suspendierten Biomasse (Bsus) dadurch erfolgt, dass die von einem Belüftungssystem (3) mit einer Intensität (I) in das Abwasser (A) eingelassenen Luftblasen (L) die sessile Biomasse (Bsess) vom Trägerkörper (2a, 6a) abscheren, insbesondere durch Einstellen einer sich ändernden Intensität (I) der Luftblasen (L).

3. Verfahren nach Anspruch 1 oder 2, **dadurch gekennzeichnet, dass** das Abwasser (A) derartig in Kontakt mit dem abgescherten Biofilm (Fshear) gebracht wird, dass Substrat aus dem Abwasser (A) in den abgescherten Biofilm (Fshear) eindringen und diesen dadurch versorgen kann, wodurch sich der abgescherte Biofilm (Fshear) in granularen Schlamm (Fgran) umwandelt.

4. Verfahren nach einem der vorhergehenden Ansprüche, **dadurch gekennzeichnet, dass** die suspendierten Schlammflocken (Fsus) und/oder die leichte Schlammfraktion (Sl) aus der suspendierten Biomasse (Bsus), die in dem oberen Bereich (1b) des Klärbeckens (1) schweben,
- während des Befüllens des Klärbeckens (1) mit verunreinigtem Abwasser (A) (ST1), und/oder
- während des Wartens, bis sich der abgescherte Biofilm (Fshear) aus der suspendierten Biomasse (Bsus) in dem unteren Bereich (1a) oder an dem Boden (1c) des Klärbeckens (1) absetzen,
abgezogen werden, so dass sich nachfolgend in dem oberen Bereich (1b) des Klärbeckens (1) Klarwasser (K) abgetrennt von der suspendierten Biomasse (Bsus) befindet.

5. Verfahren nach einem der vorhergehenden Ansprüche, **dadurch gekennzeichnet, dass** das Durchmischen und/oder Aufwirbeln von suspendierter Biomasse (Bsus), die sich an einem Boden (1c) des Klärbeckens (1) absetzt, dadurch erfolgt, dass das Abwasser (A) in dem unteren Bereich (1a) des Klärbeckens (1), in dem sich auch die abgesetzte suspendierte Biomasse (Bsus) befindet, über die mindestens eine Zulaufleitung (5) in das Klärbecken (1) eingefüllt wird.

6. Verfahren nach Anspruch 5, **dadurch gekennzeichnet, dass** das Befüllen des Klärbeckens (1) mit verunreinigtem Abwasser (A) über mindestens eine, vorzugsweise zwei Zulaufleitungen (5) (ST1) derartig erfolgt, dass ein spiralförmiger Fluss erzeugt wird, um die suspendierte Biomasse (Bsus), die sich in einem unteren Bereich (1a) und/oder am Boden (1c) des Klärbeckens (1) absetzt, zu durchmischen und/oder aufzuwirbeln.

7. Verfahren nach einem der vorhergehenden Ansprüche, **dadurch gekennzeichnet, dass** das Verfahren in mehreren Reinigungszyklen im Rahmen eines SBR-Prozesses durchgeführt wird.

8. System (100) zum Erzeugen von granularem Schlamm (Fgran), insbesondere nach einem Verfahren gemäß einem der vorhergehenden Ansprüche, mit mindestens einem Klärbecken (1), mindestens aufweisend:
- eine Zulaufleitung (5), durch die Abwasser (A) in das Klärbecken (1) eingefüllt werden kann,
- Mittel zum Durchmischen und/oder Aufwirbeln von suspendierter Biomasse (Bsus), die sich an einem Boden (1c) des Klärbeckens (1) abgesetzt hat, um das eingefüllte verunreinigte Abwasser (A) mit der abgesetzten suspendierten Biomasse (Bsus) derartig in Kontakt bringen zu können, dass sich ein abgescherter Biofilm (Fshear) als Bestandteil der suspendierten Biomasse (Bsus) nachfolgend in granularen Schlamm (Fgran) umwandeln kann,
- mindestens ein Trägerkörper (2a, 6a), an dem jeweils sessile Biomasse (Bsess) anwachsen kann, wobei der mindestens eine Trägerkörper (2a, 6a) Bestandteil eines Festbettmoduls (2) oder eines Wirbelbetts (6) ist,
- ein Belüftungssystem (4) mit Belüftungselementen (4b) mit Löchern (4c) zum Einlassen von Luftblasen (L) in das eingefüllte Abwasser (A) in dem Klärbecken (1), wobei das Belüftungssystem (4) unterhalb des mindestens einen Trägerkörpers (2a, 6a) angeordnet ist,
- eine Vorrichtung zum Abscheren der sessilen Biomasse (Bsess) von dem mindestens einen Trägerkörper (2a, 6a) derartig, dass sich der abgescherte Biofilm (Fshear) ausbilden kann und dieser als suspendierte Biomasse (Bsus) in das Abwasser (A) im Klärbecken (1) übergehen kann;
- ein Separierungssystem (3) mit perforierten Rohrleitungen (3b), wobei das Separierungssystem (3) aus einer Rohrkonstruktion (3a) gebildet ist, die aus mehreren ausgedehnten perforierten Rohrleitungen (3b) zusammengesetzt ist, wobei die Rohrleitungen (3b) und/oder die Rohrkonstruktion (3a) in einem oberen Bereich (1b) des Klärbeckens (1) angeordnet ist und ausgebildet ist, suspendierte Schlammflocken (Fsus) und/oder eine leichte Schlammfraktion (Sl) aus der suspendierten Biomasse (Bsus), die in dem oberen Bereich (1b) des Klärbeckens (1) schweben, großflächig abzuziehen; und
- Mittel zum Entnehmen von biologisch gereinigtem Klarwasser (K) aus dem oberen Bereich (1b) des Klärbeckens (1).

9. System (100) nach Anspruch 8, **dadurch gekennzeichnet, dass** die Vorrichtung zum Abscheren der sessilen Biomasse (Bsess) von dem mindestens einen Trägerkörper (2a) durch das Belüftungssystem (4) gebildet ist, das Luftblasen (L) mit einer derartigen Intensität (I) erzeugen und in das Abwasser (A) einlassen kann, dass sich die sessile Biomasse (Bsess) von dem mindestens einen Trägerkörper (2a, 6a) ablösen und als abgescherte Biomasse (Fshear) in das Abwasser (A) übergehen kann.

10. System (100) nach einem der Ansprüche 8 oder 9, **dadurch gekennzeichnet, dass** das Separierungssystem (3) aus einer Rohrkonstruktion (3a) gebildet ist, die aus mehreren ausgedehnten perforierten Rohrleitungen (3b) zusammengesetzt ist, wobei die Rohrleitungen (3b) und/oder die Rohrkonstruktion (3a) in einem oberen Bereich (1a) des Klärbeckens (1) angeordnet ist, beispielsweise oberhalb auf einem Rahmen (2b) des Festbettmoduls (2) befestigt ist.

11. System (100) nach einem der Ansprüche 8 bis 10, **dadurch gekennzeichnet, dass** die Mittel zum Durchmischen und/oder Aufwirbeln von suspendierter Biomasse (Bsus), die sich an einem Boden (1c) des Klärbeckens (1) abgesetzt hat, durch die mindestens eine Zulaufleitung (5) und/oder ein Rührwerk (7) gebildet wird/werden.

12. Abwasserbehandlungssystem (100) nach Anspruch 11, **dadurch gekennzeichnet, dass** die mindestens eine Zulaufleitung (5) als Mittel zum Durchmischen und/oder Aufwirbeln von suspendierter Biomasse (Bsus), die sich an einem Boden (1c) des Klärbeckens (1) abgesetzt hat, in dem unteren Bereich (1a) des Klärbeckens (1) vorgesehen ist, wobei die mindestens eine Zulaufleitung (5) vorzugsweise derartig angeordnet ist, dass das Abwasser (A) durch die mindestens eine Zulaufleitung (5) in einem spiralförmigen Fluss in das Klärbecken (1) eingelassen werden kann, um die suspendierte Biomasse (Bsus), die sich an dem Boden (1c) des Klärbeckens (1) absetzt, zu durchmischen und/oder aufzuwirbeln.
